# EUROPEAN PATENT APPLICATION

(11) **EP 4 749 563 A1**
(43) Date of publication of application: **27.05.2026**
(21) Application number: 24851069.5
(22) Date of filing: 07.08.2024
(51) Int. Cl.: G06T 5/00

(54) **IMAGE PROCESSING METHOD AND RELATED APPARATUS**

(30) Priority: 09.08.2023 CN 202311002207
(71) Applicant: HUAWEI TECHNOLOGIES CO., LTD., Shenzhen 518129 (CN); Dalian University of Technology, Dalian, Liaoning 116024 (CN)
(72) Inventor: YOU, Wei, Shenzhen, Guangdong 518129 (CN); WANG, Yaoyuan, Shenzhen, Guangdong 518129 (CN); ZHANG, Ziyang, Shenzhen, Guangdong 518129 (CN); ZHANG, Pengyu, Dalian, Liaoning 116024 (CN); JU, Hao, Dalian, Liaoning 116024 (CN); JIA, Xu, Dalian, Liaoning 116024 (CN); LU, Huchuan, Dalian, Liaoning 116024 (CN)
(74) Representative: Thun, Clemens
(86) International application number: PCT/CN2024/110502
(87) International publication number: WO 2025/031424

(57) **Abstract**

This application provides an image processing method and a related apparatus. The image processing method includes: obtaining a first image; determining blurring information indicating a blurred area in the first image; and performing deblurring processing on the first image based on the first image and the blurring information of the first image by using a first neural network, to obtain a second image. In the method, the first neural network is trained and is used for image deblurring. Specifically, the first neural network is trained based on an image and blurring information indicating a blurred area in the image. Therefore, in comparison with a neural network obtained through training based only on images, using the first neural network for image deblurring helps improve definition of a deblurred image.

## Description

This application claims priority to Chinese Patent Application No. 202311002207.8, filed with the China National Intellectual Property Administration on August 9, 2023 and entitled "IMAGE PROCESSING METHOD AND RELATED APPARATUS", which is incorporated herein by reference in its entirety.

### TECHNICAL FIELD

This application relates to the field of autonomous driving, and in particular, to an image processing method and a related apparatus.

### BACKGROUND

In the field of autonomous driving or video surveillance, image quality is of great importance. However, in an actual condition, a shot image is usually blurred due to some factors. For example, a blurred image is shot because a camera shakes or a photographed target object moves rapidly. Therefore, image deblurring is needed.

Currently, an image deblurring method is as follows: A training sample is constructed, where the training sample includes a blurred image and a label, and the label indicates a clear image corresponding to the blurred image; a neural network is trained based on the training sample, to obtain a trained neural network; and a new blurred image is input to the trained neural network, to obtain a deblurred image of the new blurred image.

However, definition of the image obtained through deblurring cannot meet a definition requirement in many scenarios.

### SUMMARY

This application provides an image processing method and a related apparatus, to improve definition of a deblurred image.

According to a first aspect, this application provides an image processing method, including: obtaining a first image; determining blurring information of the first image, where the blurring information indicates a blurred area in the first image; and performing deblurring processing on the first image based on the first image and the blurring information of the first image by using a first neural network, to obtain a second image, where the first neural network is used to perform deblurring processing on an image based on the image and blurring information of the image.

The blurring information of the first image may be considered as some information that can indicate the blurred area in the first image.

It is noted herein that a manner of determining the blurring information of the first image is not limited in embodiments.

For example, a plurality of training samples are constructed, where each of the plurality of training samples includes one pair of images with different blurring degrees (also referred to as a sorting sample pair) and a label, and the label indicates sorting of image-level blurring degrees of the pair of images with different blurring degrees. A neural network is trained by using the plurality of training samples, where an input of the neural network is an image. Then, a feature output by a convolutional layer in a trained neural network after the first image is input to the trained neural network is determined as the blurring information of the first image.

For example, a plurality of training samples are constructed, where each of the plurality of training samples includes one pair of images with different blurring degrees (also referred to as a sorting sample pair) and a label, and the label indicates sorting of pixel-level blurring degrees of the pair of images with different blurring degrees. A neural network is trained by using the plurality of training samples, where an input of the neural network is an image. Then, a feature output by a convolutional layer in a trained neural network after the first image is input to the trained neural network is determined as the blurring information of the first image.

For example, a plurality of training samples are constructed, where each of the plurality of training samples includes one pair of images with different blurring degrees (also referred to as a sorting sample pair) and a label, and the label indicates sorting of image-level blurring degrees and sorting of pixel-level blurring degrees of the pair of images with different blurring degrees. A neural network is trained by using the plurality of training samples, where an input of the neural network is an image. Then, a feature output by a convolutional layer in a trained neural network after the first image is input to the trained neural network is determined as the blurring information of the first image.

In this embodiment, after the blurring information of the first image is determined, the first neural network is used to perform deblurring processing on the first image based on the first image and the blurring information of the first image. The first neural network is trained and is used for image deblurring. In other words, in this embodiment, an image output by the first neural network after the first image and the blurring information of the first image are input to the first neural network is used as a deblurred image of the first image.

Specifically, the first neural network in this application is obtained through training based on an image and obtained blurring information of the image, instead of being obtained through training based only on images. The blurring information of the image may be considered as some information that can indicate a blurred area in the image. Therefore, in comparison with a neural network obtained through training based only on images, using the first neural network for image deblurring helps improve definition of a deblurred image.

With reference to the first aspect, in a possible implementation, the method further includes: obtaining first event data generated by an event camera within first duration, where the first duration is exposure duration used by a first camera that shoots the first image. Determining the blurring information of the first image includes: determining the blurring information of the first image based on the first image and the first event data.

In this embodiment, when the blurring information of the first image is obtained, the event data generated by the event camera, namely, the first event data, is further considered. This helps improve accuracy of the obtained blurring information of the first image, and helps further improve deblurring effect.

In an implementation, determining the blurring information of the first image based on the first image and the first event data includes: determining, as the blurring information of the first image, a feature that is output by a blurring feature extractor after the first image and the first event data are input to the blurring feature extractor.

The blurring feature extractor is first i layers in a second neural network, the second neural network is obtained through training based on first training data, the first training data includes a pair of images with different blurring degrees, and event data and a label that correspond to the pair of images with different blurring degrees, the pair of images with different blurring degrees correspond to the same event data, and the label indicates sorting of image-level blurring degrees and/or sorting of pixel-level blurring degrees of the pair of images with different blurring degrees.

For example, in an implementation, a plurality of training samples are constructed, where each of the plurality of training samples includes one pair of images with different blurring degrees (also referred to as a sorting sample pair), and event data and a label that correspond to the pair of images with different blurring degrees, the pair of images with different blurring degrees correspond to the same event data, and the label indicates sorting of image-level blurring degrees of the pair of images with different blurring degrees. A neural network is trained by using the plurality of training samples, where an input of the neural network is an image and event data. Then, a feature output by a convolutional layer in a trained neural network after the first image and the first event data are input to the trained neural network is determined as the blurring information of the first image.

For example, a plurality of training samples are constructed, where each of the plurality of training samples includes one pair of images with different blurring degrees (also referred to as a sorting sample pair), and event data and a label that correspond to the pair of images with different blurring degrees, the pair of images with different blurring degrees correspond to the same event data, and the label indicates sorting of pixel-level blurring degrees of the pair of images with different blurring degrees. A neural network is trained by using the plurality of training samples, where an input of the neural network is an image and event data. Then, a feature output by a convolutional layer in a trained neural network after the first image and the first event data are input to the trained neural network is determined as the blurring information of the first image.

For example, a plurality of training samples are constructed, where each of the plurality of training samples includes one pair of images with different blurring degrees (also referred to as a sorting sample pair), and event data and a label that correspond to the pair of images with different blurring degrees, the pair of images with different blurring degrees correspond to the same event data, and the label indicates sorting of image-level blurring degrees and sorting of pixel-level blurring degrees of the pair of images with different blurring degrees. A neural network is trained by using the plurality of training samples, where an input of the neural network is an image and event data. Then, a feature output by a convolutional layer in a trained neural network after the first image and the first event data are input to the trained neural network is determined as the blurring information of the first image.

Optionally, exposure duration of the pair of images with different blurring degrees is different, or resolutions of the pair of images with different blurring degrees are different.

With reference to the first aspect, in a possible implementation, the method further includes: obtaining j images with different resolutions based on the first image, where the j images with different resolutions include the first image with a first resolution and j-1 images with different resolutions obtained by scaling down the first image; and obtaining blurring information of each of the j-1 images with different resolutions based on the image and the first event data by using the blurring feature extractor. Performing deblurring processing on the first image based on the first image and the blurring information of the first image by using the first neural network, to obtain the second image includes: performing deblurring processing on the first image based on the first image, the blurring information of the first image, the j-1 images with different resolutions, and the respective blurring information of the j-1 images with different resolutions by using the first neural network, to obtain the second image.

Optionally, j is 3, and the j-1 images with different resolutions include an image obtained by performing downsampling with a factor of 2 on the first image and an image obtained by performing further downsampling with a factor of 2 on the image obtained by performing downsampling with a factor of 2.

Specifically, in a manner of obtaining the first neural network, second training data is obtained, where the second training data includes a third image with the first resolution, blurring information of the third image, j-1 images with different resolutions obtained by scaling down the third image and respective blurring information, and respective labels of the third image and the j-1 images with different resolutions obtained by scaling down the third image, and the label of each image indicates a deblurred image of the image; and a neural network is trained based on the second training data, to obtain the first neural network.

With reference to the first aspect, in a possible implementation, the first camera is an RGB camera.

With reference to the first aspect, in a possible implementation, the first neural network is a convolutional neural network.

According to a second aspect, this application provides an image processing apparatus, including: an obtaining module, configured to obtain a first image; and a processing module, configured to determine blurring information of the first image, where the blurring information indicates a blurred area in the first image. The processing module is further configured to perform deblurring processing on the first image based on the first image and the blurring information of the first image by using a first neural network, to obtain a second image, where the first neural network is used to perform deblurring processing on an image based on the image and blurring information of the image.

With reference to the second aspect, in a possible implementation, the obtaining module is further configured to obtain first event data generated by an event camera within first duration, where the first duration is exposure duration used by a first camera that shoots the first image. The processing module is further configured to determine the blurring information of the first image based on the first image and the first event data.

With reference to the second aspect, in a possible implementation, when the processing module determines the blurring information of the first image based on the first image and the first event data, the processing module is specifically configured to determine, as the blurring information of the first image, a feature that is output by a blurring feature extractor after the first image and the first event data are input to the blurring feature extractor. The blurring feature extractor is first i layers in a second neural network, the second neural network is obtained through training based on first training data, the first training data includes a pair of images with different blurring degrees, and event data and a label that correspond to the pair of images with different blurring degrees, the pair of images with different blurring degrees correspond to the same event data, and the label indicates sorting of image-level blurring degrees and/or sorting of pixel-level blurring degrees of the pair of images with different blurring degrees.

With reference to the second aspect, in a possible implementation, exposure duration of the pair of images with different blurring degrees is different, or resolutions of the pair of images with different blurring degrees are different.

With reference to the second aspect, in a possible implementation, the processing module is further configured to: obtain j images with different resolutions based on the first image, where the j images with different resolutions include the first image with a first resolution and j-1 images with different resolutions obtained by scaling down the first image;
obtain blurring information of each of the j-1 images with different resolutions based on the image and the first event data by using the blurring feature extractor; and perform deblurring processing on the first image based on the first image, the blurring information of the first image, the j-1 images with different resolutions, and the respective blurring information of the j-1 images with different resolutions by using the first neural network, to obtain the second image.

Optionally, j is 3, and the j-1 images with different resolutions include an image obtained by performing downsampling with a factor of 2 on the first image and an image obtained by performing further downsampling with a factor of 2 on the image obtained by performing downsampling with a factor of 2.

With reference to the second aspect, in a possible implementation, the obtaining module is further configured to obtain second training data, where the second training data includes a third image with the first resolution, blurring information of the third image, j-1 images with different resolutions obtained by scaling down the third image and respective blurring information, and respective labels of the third image and the j-1 images with different resolutions obtained by scaling down the third image, and the label of each image indicates a deblurred image of the image. The processing module is further configured to train a neural network based on the second training data, to obtain the first neural network.

With reference to the second aspect, in a possible implementation, the first camera is an RGB camera.

With reference to the second aspect, in a possible implementation, the first neural network is a convolutional neural network.

According to a fourth aspect, this application provides an autonomous driving apparatus, configured to perform the image processing method according to the first aspect or any one of the implementations of the first aspect.

According to a fifth aspect, this application provides an autonomous driving system, including the image processing apparatus according to the second aspect.

According to a sixth aspect, an image processing apparatus includes a memory and a processor. The memory is configured to store program instructions, and the processor is configured to invoke the program instructions in the memory to perform the method according to the first aspect.

According to a seventh aspect, this application provides a computer-readable medium. The computer-readable medium stores program code to be executed by a computer, and the program code includes instructions used to perform the method according to the first aspect or any one of the possible implementations of the first aspect.

According to an eighth aspect, this application provides a computer program product. The computer program product includes computer program code. When the computer program code is run on a computer, the computer is enabled to implement the method according to the first aspect or any one of the possible implementations of the first aspect.

### BRIEF DESCRIPTION OF DRAWINGS

FIG. 1 is a diagram of a structure of an image deblurring system according to this application;
FIG. 2 is a schematic flowchart of an image deblurring method according to an embodiment of this application;
FIG. 3 is a diagram of training a neural network based on a sorting sample pair according to this application;
FIG. 4 is a diagram of obtaining a first neural network according to this application;
FIG. 5 is a diagram of a structure of another image deblurring system according to this application;
FIG. 6 is a schematic flowchart of an image deblurring method according to another embodiment of this application;
FIG. 7 is a diagram of training a neural network based on event data according to this application;
FIG. 8 is a diagram of a structure of an image deblurring method according to another embodiment of this application;
FIG. 9 is a diagram of a structure of an image deblurring apparatus according to an embodiment of this application; and
FIG. 10 is a diagram of a structure of an image deblurring apparatus according to another embodiment of this application.

### DESCRIPTION OF EMBODIMENTS

To make objectives, technical solutions, and advantages of this application clearer, the following clearly and completely describes the technical solutions of this application with reference to specific embodiments and accompanying drawings of this application. It is clear that the described embodiments are merely some but not all of embodiments of this application. All other embodiments obtained by a person of ordinary skill in the art based on embodiments of this application without creative efforts shall fall within the protection scope of this application.

For ease of understanding, related terms in this application are first described.

### 1. Event camera (Event Camera)

The event camera is sometimes referred to as a dynamic vision sensor (dynamic vision sensor, DVS), and is a new camera that simulates a working mechanism of a human brain. The event camera has advantages of a high dynamic range, a low delay, a high frame rate, and low power consumption, and can capture high-precision time and space information of a fast moving object. Each pixel of the camera can independently sense a change in light brightness, and when the change exceeds a threshold, a specially designed circuit outputs an event. Working statuses of all pixels are independent of each other, and asynchronous output can be implemented. Therefore, the camera has an extremely high response speed (at a microsecond level), and can effectively improve effect of tasks such as motion sensing and image enhancement.

### 2. Neural network

Artificial intelligence (artificial intelligence, AI) is a theory, a method, a technology, and an application system that simulates, extends, and expands human intelligence by using a digital computer or a machine controlled by a digital computer, to perceive an environment, obtain knowledge, and obtain an optimal result by using the knowledge. In other words, artificial intelligence is a branch of computer science, and attempts to understand essence of intelligence and produce a new intelligent machine that can react in a way similar to human intelligence. Artificial intelligence is to study design principles and implementation methods of various intelligent machines, so that the machines have perception, inference, and decision-making functions.

A key technology of artificial intelligence today is a neural network (neural network, NN). In the neural network, a large quantity of simple processing units (referred to as neurons) are widely interconnected by simulating connections between nerve cells of a human brain, to form a complex network system.

A simple neural network includes three layers: an input layer, an output layer, and a hidden layer (also referred to as an intermediate layer). Each of connections between the layers corresponds to one weight (a value of the weight is referred to as a weight value or a parameter). A reason why the neural network has excellent performance in the field of computer vision, natural language processing, and the like is that a weight value is adjusted by using a training algorithm, so that a prediction result of the neural network is optimal.

Training of the neural network generally includes two calculation steps. A first step is forward calculation, and a second step is reverse calculation. Forward calculation is as follows: After calculation is performed on an input value and a parameter, an output value is generated by using a non-linear function. The output value is used as a final output of the network, or is used as a subsequent input value to continue similar calculation. A deviation between the output value of the network and an actual label value of a corresponding sample is measured by using a model loss function. The loss function is represented as a function *f*(*x, w*) of an input sample x and a network parameter w. To minimize the loss function, the network parameter w needs to be continuously adjusted. Reverse calculation is to obtain an updated value of the parameter w. In a gradient descent-based algorithm, reverse calculation starts from a last layer of the neural network, calculates a partial derivative of the loss function with respect to a parameter of each layer, and finally obtains partial derivatives of all parameters, which are referred to as a gradient. During each iteration, the parameter w is updated in a reverse direction of the gradient at a specific step *η*, to obtain a new parameter w. That is, one step of training is completed.

A process of training the neural network is a process of learning a weight corresponding to a neuron, and a final objective of the process is to obtain a weight corresponding to a neuron of each layer of a trained neural network model.

### 3. Exposure duration

Exposure duration is a time interval from opening of a shutter to closing of the shutter. In this time interval, a target object may leave an image on a film.

**In the field of autonomous driving, video surveillance, sports photography, or the like,** image quality is of great importance. For example, in an autonomous driving scenario, an autonomous driving vehicle needs to make a further decision for autonomous driving behavior based on a captured image in a driving process, for example, whether to turn left, turn right, or go straight. It should be understood that, in this scenario, image quality is a key factor that affects decision-making of the autonomous driving vehicle, and further affects safety of the autonomous driving vehicle in the driving process.

However, in an actual condition, a shot image is usually blurred due to some factors. For example, when a target object moves rapidly or a camera shakes, a shot image is blurred. Therefore, how to deblur an image becomes an urgent problem to be resolved.

Currently, an image deblurring method is as follows: A training sample is constructed, where the training sample includes a blurred image and a label, and the label indicates a clear image corresponding to the blurred image; a neural network is trained based on the training sample, to obtain a trained neural network; and a new blurred image is input to the trained neural network, to obtain a deblurred image of the new blurred image. In other words, in the deblurring method, a neural network directly learns a mapping relationship between a blurred image and a clear image, and then a blurred image that needs to be deblurred is input to a learned neural network, to obtain a deblurred image.

However, it is found through analysis that in the deblurring method, quality of the deblurred image is still not good enough.

In view of this, this application provides an image deblurring method, to improve quality of a deblurred image.

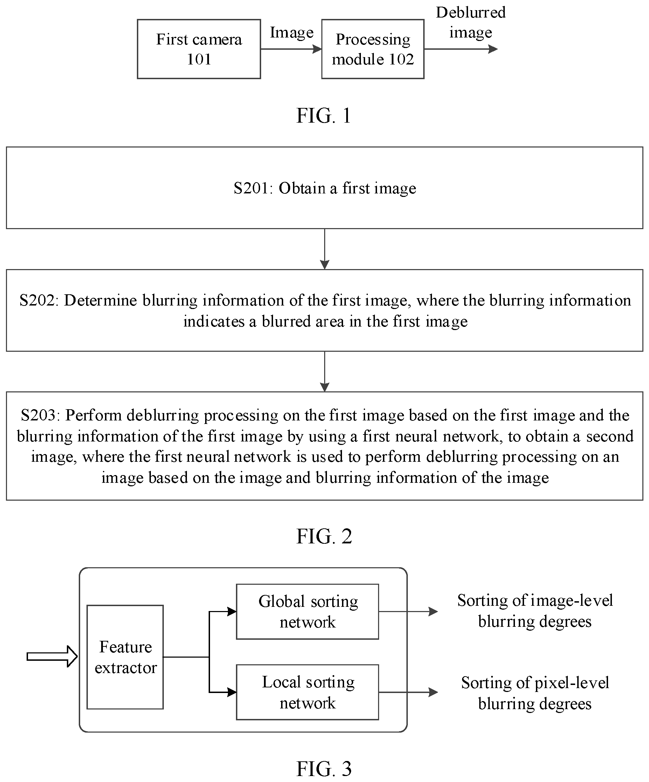

FIG. 1 is a diagram of a structure of an image deblurring system according to this application. As shown in FIG. 1, the deblurring system includes a first camera 101 and a processing module 102. The first camera 101 is configured to: capture an image that can describe external environment information, and then input the image to the processing module 102. The processing module 102 is configured to: receive the image sent by the first camera 101, and perform deblurring processing based on the image by using a preset processing algorithm, to obtain a deblurred image. In this way, video quality is improved.

It is noted herein that a specific form of the first camera 101 is not limited in embodiments of this application. For example, the first camera may be a fisheye camera, an eagle-eye camera, or a monocular/binocular camera. This does not constitute a limitation on this application.

It is further noted herein that a specific scenario to which the image deblurring system is applied is not limited in embodiments.

For example, the image deblurring system may be applied to the field of sports photography. When an athlete moves at a high speed, obvious blurring occurs in photographing. The method in this application is used to provide a deblurred image.

For example, the image deblurring system may be applied to an autonomous driving scenario. When an autonomous driving vehicle travels in a low-light environment, imaging quality of the autonomous driving vehicle is degraded, and an image is likely to be blurred, affecting perception and decision-making in autonomous driving. The deblurring method provided in this application is used to provide a deblurred image for the autonomous driving vehicle.

For example, the image deblurring system may be applied to a video surveillance scenario. In a low-light environment, exposure duration of a camera increases, and a moving object in a surveillance image and video is prone to local blurring, affecting identification of a pedestrian and a vehicle. The deblurring method provided in this application is used to obtain a deblurred image.

Certainly, the image deblurring system may also be applied to another field in which other processing is performed based on an image.

With the use of specific embodiments, the following describes in detail the technical solutions of this application and how to resolve the foregoing technical problem by using the technical solutions of this application. The following several specific embodiments may be combined with each other, and a same or similar concept or process may not be described repeatedly in some embodiments. The following describes embodiments of this application with reference to the accompanying drawings.

FIG. 2 is a schematic flowchart of an image deblurring method according to this application. The method in this embodiment may include S201, S202, and S203. The image processing method may be performed by the processing module shown in FIG. 1.

S201: Obtain a first image.

In this embodiment, obtaining the first image is specifically obtaining an image that is captured by a first camera for exposure duration and that can describe external environment information. In an example, the first camera is an RGB camera.

It is noted herein that a specific value of the exposure duration of the first camera is not limited in embodiments.

S202: Determine blurring information of the first image, where the blurring information indicates a blurred area in the first image.

In this embodiment, after the first image is obtained, the blurring information of the first image is first obtained. The blurring information specifically indicates the blurred area in the first image. In other words, in this embodiment, blurring information of an image is some information that can describe a blurred area in the image.

The following describes several implementations of obtaining the blurring information indicating the blurred area in the first image.

In a first implementation, the following is included.
(1) A plurality of training samples are constructed.

Specifically, each of the plurality of training samples includes one pair of images with different blurring degrees and a label. The label indicates sorting of image-level blurring degrees of the pair of images with different blurring degrees.

In this application, the pair of images with different blurring degrees included in the training sample is also referred to as a sorting sample pair.

For example, a sorting sample pair is referred to as an image 1 and an image 2. A label value is a scalar. For example, when the label value is 1, it indicates that a blurring degree of the image 1 is greater than a blurring degree of the image 2, or when the label value is 0, it indicates that a blurring degree of the image 1 is less than or equal to a blurring degree of the image 2. Alternatively, a label is two-dimensional data. For example, when the label is 01, it indicates that a blurring degree of the image 1 is greater than a blurring degree of the image 2, or when the label is 10, it indicates that a blurring degree of the image 1 is less than or equal to a blurring degree of the image 2.

(2) A neural network is trained by using the plurality of training samples.

For example, the neural network includes a feature extractor and a global sorter. The feature extractor is configured to: receive an image, extract an image feature, and output the image feature to the global sorter. The global sorter is configured to: receive a feature that is of each image in a sorting sample pair and that is extracted by the feature extractor, and output sorting of image-level blurring degrees of the sorting sample pair.

It should be understood that, in this manner, when the neural network is trained, the neural network learns an image-level blurring degree. In other words, the neural network may be considered as a neural network used to learn an image-level blurring degree of an image.

(3) The feature extractor is determined as a blurring feature extractor configured to extract blurring information of an image.

In this case, the blurring information of the first image may be obtained by inputting the first image captured in S201 to the feature extractor.

In a second implementation, the following is included.
(1) A plurality of training samples are constructed.

Specifically, each of the plurality of training samples includes one pair of images with different blurring degrees (also referred to as a sorting sample pair) and a label. The label indicates sorting of pixel-level blurring degrees of the pair of images with different blurring degrees. For example, there is a sorting sample pair of two images with a resolution of 8*8, a label is 64 values, and each value indicates sorting of blurring degrees of same pixels.

(2) A neural network is trained by using the plurality of training samples.

For example, the neural network includes a feature extractor and a local sorter. The feature extractor is configured to: receive an image, extract an image feature, and output the image feature to the local sorter. The local sorter is configured to: receive a feature that is of each image in a sorting sample pair and that is extracted by the feature extractor, and output sorting of pixel-level blurring degrees of the sorting sample pair.

It should be understood that, in this manner, when the neural network is trained, the neural network learns a pixel-level blurring degree. In other words, the neural network may be considered as a neural network used to learn a pixel-level blurring degree of an image.

(3) The feature extractor is determined as a blurring feature extractor configured to extract blurring information of an image.

In this case, the blurring information of the first image is obtained by inputting the first image captured in S201 to the feature extractor.

A third implementation is a combination of the first implementation and the second implementation. During implementation, the following is included.
(1) A plurality of training samples are constructed.

Specifically, each of the plurality of training samples includes one pair of images with different blurring degrees (also referred to as a sorting sample pair) and a label. The label indicates sorting of image-level blurring degrees and sorting of pixel-level blurring degrees of the pair of images with different blurring degrees.

(2) A neural network is trained by using the plurality of training samples.

For example, as shown in FIG. 3, the neural network includes a feature extractor, a global sorter, and a local sorter. The feature extractor is configured to: receive an image, extract an image feature, and output the image feature to the global sorter and the local sorter. The global sorter is configured to: receive a feature that is of each image in a sorting sample pair and that is extracted by the feature extractor, and output sorting of image-level blurring degrees of the sorting sample pair. The local sorter is configured to: receive the feature that is of each image in the sorting sample pair and that is extracted by the feature extractor, and output sorting of pixel-level blurring degrees of the sorting sample pair.

It should be understood that, in this manner, when the neural network is trained, the neural network learns both an image-level blurring degree and a pixel-level blurring degree. In other words, the neural network may be considered as a neural network used to learn an image-level blurring degree and a pixel-level blurring degree.

(3) The feature extractor is determined as a blurring feature extractor configured to extract blurring information of an image.

In this case, the blurring information of the first image is obtained by inputting the first image captured in S201 to the feature extractor.

In this application, blurring information of an image is also referred to as, for example, blurring degree information of the image.

S203: Perform deblurring processing on the first image based on the first image and the blurring information of the first image by using a first neural network, to obtain a second image, where the first neural network is used to perform deblurring processing on an image based on the image and blurring information of the image.

Specifically, in this embodiment, the first neural network is a trained neural network used to obtain a deblurred image based on an image and blurring information of the image. The blurring information of the image is obtained based on the captured image.

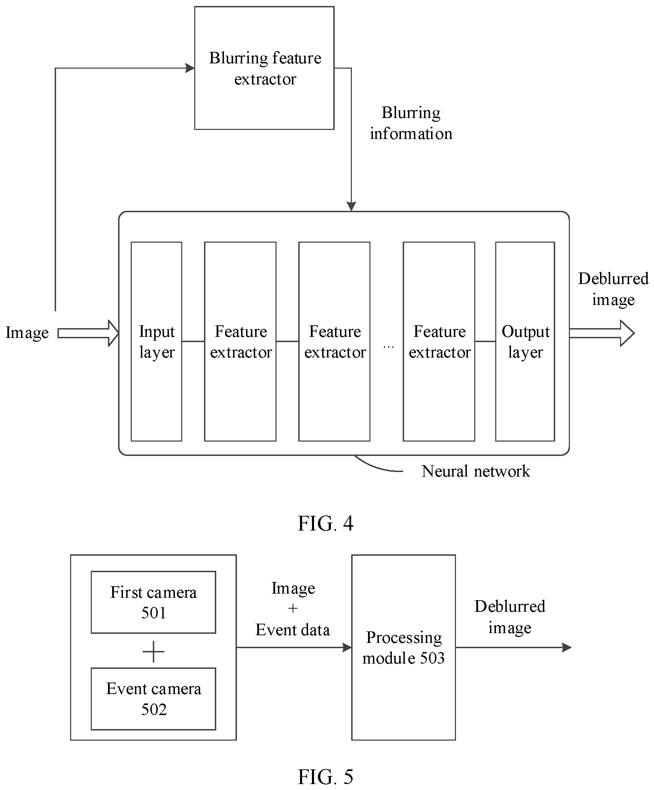

In an example, with reference to FIG. 4, a manner of obtaining the first neural network is described.
(1) A plurality of training samples are constructed.

Specifically, each of the plurality of training samples includes a blurred image and a label. The label indicates a clear image corresponding to the blurred image.

(2) A neural network model is built, and is trained by using the plurality of training samples.

In this embodiment, as shown in FIG. 4, when the neural network model is built, the neural network includes an input layer, a plurality of feature extractors, and an output layer. The input layer is configured to receive an input image, and the output layer is configured to output a deblurred image based on a received feature.

Specifically, an input of at least one of the plurality of feature extractors includes image feature data input by a previous layer of feature extractor, and further includes blurring information obtained after the image input to the neural network model passes through a blurring feature extractor. In other words, the blurring information indicating a blurred area in the input image is embedded into an image feature.

For example, in the neural network shown in FIG. 4, an input of a second feature extractor includes the blurring information. In this case, during training of the neural network, after the image is input to the neural network through the input layer, a first feature extractor of the neural network first performs feature extraction to obtain feature data 1, then the feature data 1 and the blurring information are input to the second feature extractor to obtain a further extracted feature, and the further extracted feature is input to a subsequent model, until an output image is obtained. Then, a label of the output image is compared with a label of the input image to optimize a parameter of the neural network.

It should be noted that a specific model in the neural network shown in FIG. 4 is not limited in this application. For example, the first feature extractor may include at least one convolutional layer, or the blurring information may be introduced into the first feature extractor or may be introduced into a last feature extractor. This does not constitute a limitation.

After training is completed by using the plurality of training samples, a trained neural network, namely, the first neural network, is obtained.

It should be understood that, in comparison with a neural network trained by only using images, because there is the blurring information during training, that is, the neural network may further learn the image based on the blurring information of the image, deblurring effect of deblurring a to-be-tested image by using the trained first neural network is better than that of deblurring the to-be-tested image by using the neural network obtained through training by only using the images. In other words, quality of a deblurred image can be improved.

Further, in this embodiment, when the first image needs to be deblurred, after the blurring information of the first image is obtained, the first image and the blurring information of the first image are input to the first neural network, to obtain the deblurred second image of the first image.

It should be noted that, in this embodiment, an input of the first neural network is different from an input of an input layer of the first neural network. For example, in the example shown in FIG. 4, the input layer of the neural network is used to receive only the input image, but does not receive the blurring information. However, the input of the first neural network includes both the image and the blurring information of the image. In other words, the first neural network is considered as a whole in terms of the input of the first neural network.

An event camera can capture a change in brightness, and has features of a high temporal resolution, a high dynamic range, low data redundancy, low power, and being capable of sensing a change in an image grayscale value. Therefore, this application further provides another image deblurring method.

In the method, when an image is deblurred, event data obtained by an event camera is further integrated, to further improve quality of a deblurred image. In other words, when the image is deblurred, data shot by two cameras is used: data shot by a first camera and data shot by the event camera. Alternatively, in other words, when the image is deblurred, deblurring is performed based on the data shot by the two cameras. The event camera and the first camera are two independent cameras.

Before a method for deblurring the image by integrating the event data obtained by the event camera is described, a diagram of a structure of another image deblurring system according to this application is first described with reference to FIG. 5. As shown in FIG. 5, the image deblurring system includes a first camera 501, an event camera 502, and a processing module 503.

The first camera 501 is configured to capture an image that can describe external environment information. The event camera 502 is configured to obtain event data corresponding to the image captured by the first camera 501. The event data corresponding to the image captured by the first camera 501 is specifically event data collected by the event camera within exposure duration used by the first camera to shoot the image.

The processing module 503 is configured to perform deblurring processing on the image by using a preset processing algorithm based on the image captured by the first camera and the event data collected by the event camera, to obtain a deblurred image. In this way, deblurring effect is improved.

It is further noted herein that a specific scenario to which the image deblurring system is applied is not limited in embodiments.

For example, the image deblurring system may be applied to a sports photography scenario, an autonomous driving scenario, or a video surveillance scenario.

Certainly, the image deblurring system may also be applied to another field in which other processing is performed based on an image.

Specifically, when the event data obtained by the event camera is integrated to further improve deblurring effect, blurring information of the image is obtained based on the image and the event data corresponding to the image.

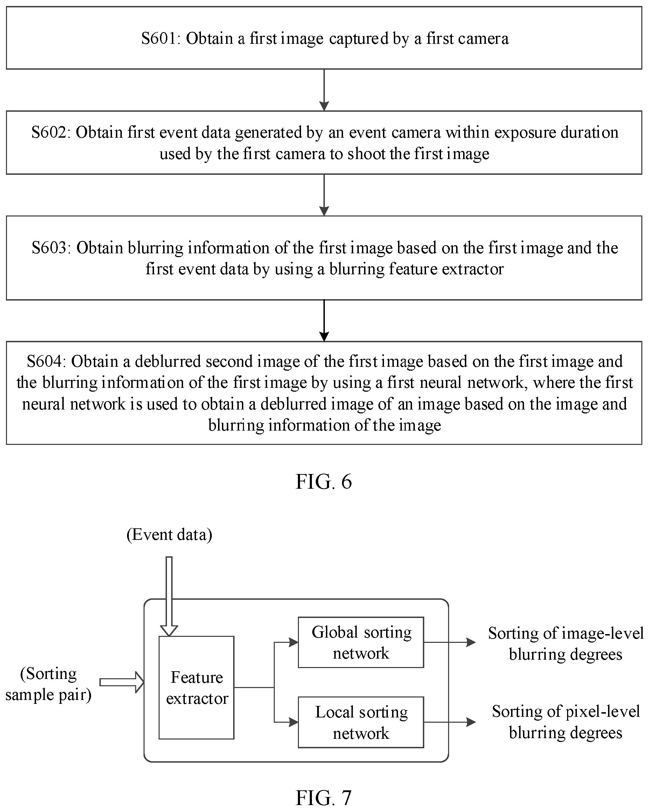

FIG. 6 is a schematic flowchart of another image deblurring method according to this application. The method may be performed by the processing module shown in FIG. 5. As shown in FIG. 6, the method includes the following steps.

S601: Obtain a first image captured by a first camera.

For descriptions of this step, refer to the descriptions of S201 in the embodiment shown in FIG. 2. Details are not described herein again.

S602: Obtain first event data generated by an event camera within exposure duration used by the first camera to shoot the first image.

In this embodiment, the first event data generated by the event camera within the exposure duration used by the first camera to shoot the first image is also referred to as first event data corresponding to the first image.

Because data generated by the event camera is usually in a form of sequence, in this embodiment, the first event data is also referred to as first sequence data.

It should be noted that, in this embodiment, there is no execution sequence between S601 and S602.

S603: Obtain blurring information of the first image based on the first image and the first event data by using a blurring feature extractor.

In this embodiment, the blurring feature extractor is configured to obtain blurring information of an image based on the image and event data corresponding to the image.

In this embodiment, after the first image and the first event data are obtained, the blurring information of the first image is obtained by using the blurring feature extractor.

The following describes several methods for obtaining the blurring feature extractor.

In a first implementation, the following is included.
(1) A plurality of training samples are constructed.

Specifically, each of the plurality of training samples includes one pair of images with different blurring degrees (also referred to as a sorting sample pair), and event data and a label that correspond to the sorting sample pair.

The two images in the sorting sample pair correspond to same event data.

The label indicates sorting of image-level blurring degrees of the pair of images with different blurring degrees. For details, refer to the descriptions of the embodiment shown in FIG. 2. Details are not described herein again.

(2) A neural network is trained by using the plurality of training samples.

For example, the neural network includes a feature extractor and a global sorter. The feature extractor is configured to: receive an image, extract an image feature, receive event data corresponding to the image, extract an event data feature, concatenate the extracted image feature and the extracted event data feature, and then send a concatenated feature to the global sorter. The global sorter is configured to: receive a concatenated feature that is of each image in a sorting sample pair and that is sent by the feature extractor, and output sorting of image-level blurring degrees of the sorting sample pair.

(3) The feature extractor in a trained neural network is used as a blurring feature extractor.

In this case, the blurring information of the first image may be obtained by inputting the first image and the first event data to the blurring feature extractor.

In a second implementation, the following is included.
(1) A plurality of training samples are constructed.

Specifically, each of the plurality of training samples includes one pair of images with different blurring degrees (also referred to as a sorting sample pair), and event data and a label that correspond to the sorting sample pair.

The label indicates sorting of pixel-level blurring degrees of the pair of images with different blurring degrees. For details, refer to the descriptions of the embodiment shown in FIG. 2. Details are not described herein again.

(2) A neural network is trained by using the plurality of training samples.

For example, the neural network includes a feature extractor and a local sorter. The feature extractor is configured to: receive an image, extract an image feature, receive event data corresponding to the image, extract an event data feature, concatenate the extracted image feature and the extracted event data feature, and then send a concatenated feature to the local sorter. The local sorter is configured to: receive a concatenated feature that is of each image in a sorting sample pair and that is sent by the feature extractor, and output sorting of pixel-level blurring degrees of the sorting sample pair.

(3) The feature extractor in a trained neural network is used as a blurring feature extractor.

In this case, the blurring information of the first image may be obtained by inputting the first image and the first event data to the blurring feature extractor.

A third implementation is a combination of the first implementation and the second implementation, including:
During implementation, a method for obtaining a blurring feature extractor configured to extract image-level blurring information and pixel-level blurring information includes:
(1) A plurality of training samples are constructed.

Specifically, each of the plurality of training samples includes one pair of images with different blurring degrees (also referred to as a sorting sample pair), and event data and a label that correspond to the sorting sample pair.

The label indicates sorting of image-level blurring degrees and sorting of pixel-level blurring degrees of the pair of images with different blurring degrees.

(2) A neural network is trained by using the plurality of training samples.

For example, as shown in FIG. 7, the neural network includes a feature extractor, a global sorter, and a local sorter. The feature extractor is configured to: receive an image, extract an image feature, receive event data corresponding to the image, extract an event data feature, concatenate the extracted image feature and the extracted event data feature, and then send a concatenated feature to global sorting and the local sorter. The global sorter is configured to: receive a concatenated feature that is of each image in a sorting sample pair and that is sent by the feature extractor, and output sorting of image-level blurring degrees of the sorting sample pair. The local sorter is configured to: receive the concatenated feature that is of each image in the sorting sample pair and that is sent by the feature extractor, and output sorting of image-level blurring degrees and sorting of pixel-level blurring degrees of the sorting sample pair.

(3) The feature extractor in a trained neural network is used as a blurring feature extractor.

In this case, the blurring information of the first image may be obtained by inputting the first image and the first event data to the feature extractor.

In this embodiment, regardless of the first implementation, the second implementation, or the third implementation, neural networks trained in the three manners are also referred to as second neural networks.

S604: Obtain a deblurred second image of the first image based on the first image and the blurring information of the first image by using a first neural network, where the first neural network is used to obtain a deblurred image of an image based on the image and blurring information of the image.

Specifically, in this embodiment, the first neural network is a trained neural network used to obtain a deblurred image based on an image and blurring information of the image. The blurring information of the image is obtained based on the image and event data corresponding to the image.

In an example, a manner of obtaining the first neural network is described.
(1) A plurality of training samples are constructed.

Specifically, each of the plurality of training samples includes an image, event data corresponding to the image, blurring information of the image, and a label. The label indicates a clear image corresponding to the image.

(2) A neural network model is built, and is trained by using the plurality of training samples, and a trained neural network is determined as the first neural network.

In this embodiment, when the neural network model is built, an input of at least one feature extractor included in the neural network model includes image feature data input by a previous layer of feature extractor, and further includes blurring information obtained after an input image input to the neural network model passes through a blurring feature extractor. In other words, the blurring information of the image is embedded into an image feature.

It can be learned that, in this embodiment, when the first image needs to be deblurred, the blurring information of the first image is first obtained based on the first image and the first event data corresponding to the first image. In other words, the first event data collected by the event camera is integrated, to obtain the blurring information of the first image. This can further improve deblurring effect during deblurring of the first image, to improve quality of the deblurred image.

Optionally, the event camera may collect a plurality of groups of sequence data within the exposure duration of the image. In this case, indicating the clear image corresponding to the image by the label in the embodiment shown in FIG. 6 may alternatively be replaced with indicating a corresponding clear image sequence (namely, a plurality of clear images). Correspondingly, when the first event data is a plurality of groups of sequence data, after the first image, the first event data, and the blurring information of the first image are input to the trained first neural network, the first neural network may output a clear image sequence (that is, output a plurality of clear images).

Further, in this embodiment, before the image is deblurred by using the first neural network, the following may be further included: obtaining j images with different resolutions based on the first image, where the j images with different resolutions include the first image with a first resolution and j-1 images with different resolutions obtained by scaling down the first image; and obtaining blurring information of each of the j-1 images with different resolutions based on the image and the first event data by using the blurring feature extractor. Correspondingly, performing deblurring processing on the first image based on the first image and the blurring information of the first image by using the first neural network, to obtain the second image includes: The first neural network performs deblurring processing on the first image based on the first image, the blurring information of the first image, the j-1 images with different resolutions, and the respective blurring information of the j-1 images with different resolutions, to obtain the second image.

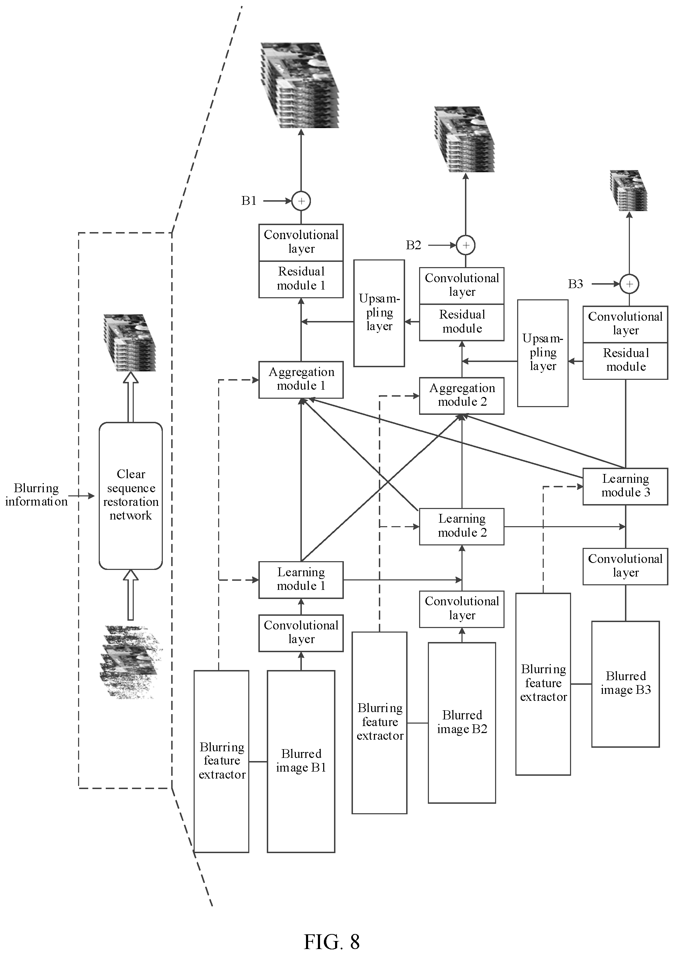

The following describes a complete image deblurring method with reference to FIG. 8 by using an example in which j is 3, the event camera collects a plurality of groups of sequence data within the exposure duration of the first camera, and the first neural network may output a clear image sequence when the first neural network is used for deblurring.

Specifically, the method includes the following steps.

Step 1: Obtain a first image (for example, represented as B1) with a first resolution and first event data corresponding to the first image.

Step 2: Perform downsampling with a factor of 2 on the first image B1 to obtain an image B2 with a second resolution, and perform downsampling with a factor of 2 on the image B2 to obtain an image B3 with a third resolution.

Through step 2, three types of images with different scales are obtained.

Step 3: Obtain, by using a feature extractor in a trained blurring estimation network, blurring information that respectively corresponds to the image B1, the image B2, and the image B3.

The feature extractor in the blurring estimation network is configured to obtain blurring information of an image, which is a blurring feature extractor. Specifically, during implementation, the following is included.
(1) At least one training sample pair is constructed, where each training sample includes one sorting sample pair, and event data and a label that correspond to the sorting sample pair.

More specifically, based on an assumption that a longer exposure time indicates a higher image blurring degree, that is, a larger quantity of clear frames used to synthesize a blurred frame indicates a more blurred image, and image-based downsampling can reduce an image blurring degree, during specific implementation of constructing a sorting sample pair, sorting sample pairs may include two types: a sorting sample pair with different exposure times and a sorting sample pair with different resolutions.

For example, for the sorting sample pair with different exposure times, during specific implementation, one frame of image may be selected as a central frame, and then T frames around the central frame are selected, to synthesize a blurred frame (a value of T is not limited, for example, is one of {3, 5, 7, 9, 11}). Two blurred samples generated by selecting different T values are the sorting sample pair with different exposure times. Optionally, frame interpolation may be performed on a selected frame by using a "SuperSlomo" method, and then all frames are averaged to avoid image ghosting.

For example, for the sorting sample pair with different resolutions, during specific implementation, T frames may be randomly selected, to generate a blurred frame, and then S-times downsampling is performed on the blurred frame by using a bicubic interpolation method (a value of S is not limited, for example, is any value in {1, 2, 4}). Two blurred samples with different resolutions are generated, which are the sorting sample pair with different resolutions.

The event data corresponding to the sorting sample pair is obtained, for example, through simulation by using a V2E method.

(2) A blurring estimation network is trained by using the at least one training sample pair.

For example, as shown in FIG. 8, a neural network includes a feature extractor, a global sorter, and a local sorter. The feature extractor is configured to: receive an image, extract an image feature, receive event data corresponding to the image, extract an event data feature, concatenate the extracted image feature and the extracted event data feature, and then send a concatenated feature to global sorting and the local sorter. The global sorter is configured to: receive a concatenated feature that is of each image in a sorting sample pair and that is sent by the feature extractor, and output sorting of image-level blurring degrees of the sorting sample pair. The local sorter is configured to: receive the concatenated feature that is of each image in the blurred image pair and that is sent by the feature extractor, and output sorting of pixel-level blurring degrees of the sorting sample pair. Then, the sorting of the image-level blurring degrees that is output by the global sorter, the pixel-level sorting output by the local sorter, and a label are used to optimize the neural network. In other words, a global sorting loss and a local sorting loss are used as supervision. When a condition is met, for example, when training based on all training sample pairs is completed or a preset quantity of iterations is reached, a trained blurring estimation network is obtained.

It is noted herein that specific forms of the feature extractor, the global sorter, and the local sorter in the blurring estimation network are not limited in embodiments. For example, the feature extractor includes four residual modules, the global sorter includes one convolutional layer, one global average pooling layer, and one fully connected layer, and the local sorter includes one convolutional layer and one Sigmoid activation function.

It should be understood that, because sizes of the sorting sample pair with different resolutions do not match, local loss sorting cannot be calculated. In this case, during training, optimization may be performed by only using a global sorting network, without using a local sorting network.

During a test, information output by the feature extractor in the blurring estimation network is obtained for a subsequent deblurring task.

Step 4: Obtain a clear sequence after deblurring of the first image by using a trained clear sequence restoration network (namely, the first neural network), where the clear sequence restoration network is used to perform deblurring processing and output a clear image sequence obtained after deblurring.

For example, as shown in FIG. 8, the clear sequence restoration network in this embodiment includes three layers. A first layer includes a convolutional layer, a feature learning module 1 (namely, a learning module 1 in the figure), a feature aggregation module 1 (namely, an aggregation module 1 in the figure), and a residual module and a convolutional layer. A second layer includes a convolutional layer, a feature learning module 2 (namely, a learning module 2 in the figure), a feature aggregation module 2 (namely, an aggregation module 2 in the figure), and a residual module and a convolutional layer. A third layer includes a convolutional layer, a feature learning module 1 (namely, a learning module 3 in the figure), and a residual module and a convolutional layer.

The following is specifically included.
(1) An image feature of the image B1 is extracted by using the convolutional layer, and then a modulation feature (namely, a feature output by the feature learning module 1) of the image B1 is obtained by using the feature learning module 1. An input of the feature learning module 1 further includes the blurring information of the image B1.
(2) An image feature of the image B2 is extracted by using the convolutional layer and then is concatenated with the feature output by the feature learning module 1, and then a modulation feature (namely, a feature output by the feature learning module 2) of the image B2 is obtained by using the feature learning module 2. An input of the feature learning module 2 further includes the blurring information of the image B2.
(3) An image feature of the image B3 is extracted by using the convolutional layer and then is concatenated with the feature output by the feature learning module 2, and then a modulation feature (namely, a feature output by the feature learning module 3) of the image B3 is obtained by using the feature learning module 3. An input of the feature learning module 3 further includes the blurring information of the image B3.

The input of the foregoing feature learning module includes an image with a corresponding resolution, and further includes blurring information of the image with the corresponding resolution. In other words, in this manner, blurring information may be embedded into an image feature, and the blurring information is used to guide a feature extraction process.

It is noted herein that a specific form of the feature learning module is not limited in embodiments. For example, the feature learning module includes two convolutional layers and one residual module.
(4) The modulation features of the image B1, the image B2, and the image B3 are input to the feature aggregation module 1, to obtain an aggregated feature of the image B1 (namely, a feature output by the feature aggregation module 1). An input of the feature aggregation module 1 further includes the blurring information of the image B1.
(5) The modulation features of the image B1, the image B2, and the image B3 are input to the feature aggregation module 2, to obtain an aggregated feature of the image B2 (namely, a feature output by the feature aggregation module 2). An input of the feature aggregation module 2 further includes the blurring information of the image B2.
(6) The modulation feature of the image B3 is used as an aggregated feature of the image B3.

The input of the foregoing feature aggregation module includes a modulation feature output by a previous layer of feature aggregation module, and further includes blurring information of an image with a corresponding resolution. In this manner, the blurring information may be embedded into the feature aggregation module, and the blurring information is used to guide a feature aggregation process.

It is noted herein that a specific form of the feature aggregation module is not limited in embodiments. For example, the feature aggregation module includes four convolutional layers and one softmax function. Blurring feature information of the image B1, the image B2, and the image B3 separately passes through the convolutional layers, and then a location-by-location softmax operation is performed to generate an aggregation weight. After the modulation features of the image B1, the image B2, and the image B3 are concatenated, element-by-element multiplication is performed by using the convolutional layers based on the aggregation weight, to obtain an aggregated feature.
(7) The aggregated feature of the image B3 is added to the image B3 after passing through the residual module and the convolutional layer at the third layer, to obtain a clear sequence with a same scale as the image B3. An output of the residual module at the third layer is upsampled for use in a next step.
(8) The aggregated feature of the image B2 is concatenated with an upsampling result in step (7), and is added to the image B2 after passing through the residual module and the convolutional layer at the second layer, to obtain a clear sequence with a same scale as the image B2. An output of the residual module at the second layer is upsampled for use in a next step.
(9) The aggregated feature of the image B1 is concatenated with an upsampling result in step (8), and is added to the image B1 after passing through the residual module and the convolutional layer at the first layer, to obtain a clear sequence with a same scale as the image B1.

The following describes a method for obtaining a clear sequence restoration network through training. For example, a second training sample is obtained, where the second training sample includes three images, blurring information of each of the three images, and a label of each of the three images, and the label of each image is a clear sequence image obtained after deblurring of the image. A neural network of the structure shown in FIG. 7 is trained based on the second training sample. For example, an L1 loss is used as supervision for a clear sequence with each resolution, and a model parameter is updated in iteration by using a stochastic gradient descent method, to obtain a trained clear sequence restoration network.

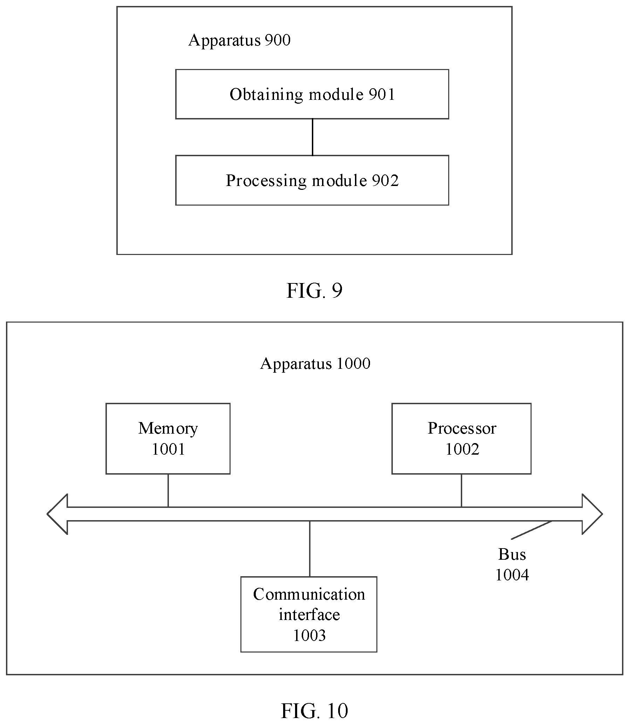

The foregoing describes in detail the image processing methods in embodiments of this application with reference to FIG. 2 to FIG. 8. The following describes in detail image processing apparatuses provided in this application with reference to FIG. 9 and FIG. 10.

FIG. 9 is a diagram of a structure of an image processing apparatus according to an embodiment of this application. Specifically, as shown in FIG. 9, the apparatus 900 includes an obtaining module 901 and a processing module 902.

Specifically 901, the obtaining module 901 is configured to obtain a first image. The processing module 902 is configured to determine blurring information of the first image, where the blurring information indicates a blurred area in the first image. The processing module 902 is further configured to perform deblurring processing on the first image based on the first image and the blurring information of the first image by using a first neural network, to obtain a second image, where the first neural network is used to perform deblurring processing on an image based on the image and blurring information of the image.

In an example, the obtaining module 901 is configured to perform the step of obtaining the first image in S201 in the embodiment in FIG. 2.

In another example, the processing module 902 is configured to perform the step of performing deblurring processing on the first image based on the first image and the blurring information of the first image by using the first neural network, to obtain the second image in S203 in the embodiment in FIG. 2.

In a possible implementation, the obtaining module 901 is further configured to obtain first event data generated by an event camera within first duration, where the first duration is exposure duration used by a first camera that shoots the first image. The processing module 902 is further configured to determine the blurring information of the first image based on the first image and the first event data.

In a possible implementation, when the processing module 902 determines the blurring information of the first image based on the first image and the first event data, the processing module 902 is specifically configured to determine, as the blurring information of the first image, a feature that is output by a blurring feature extractor after the first image and the first event data are input to the blurring feature extractor. The blurring feature extractor is first i layers in a second neural network, the second neural network is obtained through training based on first training data, the first training data includes a pair of images with different blurring degrees, and event data and a label that correspond to the pair of images with different blurring degrees, the pair of images with different blurring degrees correspond to the same event data, and the label indicates sorting of image-level blurring degrees and/or sorting of pixel-level blurring degrees of the pair of images with different blurring degrees.

In a possible implementation, the processing module 902 is further configured to: obtain j images with different resolutions based on the first image, where the j images with different resolutions include the first image with a first resolution and j-1 images with different resolutions obtained by scaling down the first image; obtain blurring information of each of the j-1 images with different resolutions based on the image and the first event data by using the blurring feature extractor; and
perform deblurring processing on the first image based on the first image, the blurring information of the first image, the j-1 images with different resolutions, and the respective blurring information of the j-1 images with different resolutions by using the first neural network, to obtain the second image.

In a possible implementation, the obtaining module 901 is further configured to obtain second training data, where the second training data includes a third image with the first resolution, blurring information of the third image, j-1 images with different resolutions obtained by scaling down the third image and respective blurring information, and respective labels of the third image and the j-1 images with different resolutions obtained by scaling down the third image, and the label of each image indicates a deblurred image of the image. The processing module 902 is further configured to train a neural network based on the second training data, to obtain the first neural network.

Optionally, the image processing apparatus in FIG. 9 may be deployed in a general-purpose computer or a server, or may be used as an embedded module. The image processing apparatus in this application is installed in the general-purpose computer, and may process collected RGB and event data to obtain a clear image or image sequence, and store the clear image or image sequence locally. The image processing apparatus in this application is installed in the server, and runs in the server as a service. Another device may invoke a computing resource of the server and the image processing apparatus in this application by sending a request, to restore an image. When used as the embedded module, the image processing apparatus may exist, for example, in devices such as a smartphone, a tablet computer, a vehicle-mounted mobile apparatus, a monitoring system, and VR/AR glasses.

FIG. 10 is a diagram of a structure of an image processing apparatus according to another embodiment of this application. The apparatus shown in FIG. 10 may be configured to perform the method according to any one of the foregoing embodiments.

As shown in FIG. 10, the apparatus 1000 in this embodiment includes a memory 1001 and a processor 1002. Optionally, the apparatus 1000 further includes a communication interface 1003 and a bus 1004. The memory 1001, the processor 1002, and the communication interface 1003 are communicatively connected to each other through the bus 1004.

The memory 1001 may be a read-only memory (read-only memory, ROM), a static storage device, a dynamic storage device, or a random access memory (random access memory, RAM). The memory 1001 may store a program. When the program stored in the memory 1001 is executed by the processor 1002, the processor 1002 is configured to perform steps of the methods shown in FIG. 2 to FIG. 8.

The processor 1002 may be a general-purpose central processing unit (central processing unit, CPU), a microprocessor, an application-specific integrated circuit (application-specific integrated circuit, ASIC), or one or more integrated circuits, and is configured to execute a related program, to implement the methods shown in FIG. 2 to FIG. 8 in this application.

The processor 1002 may alternatively be an integrated circuit chip having a signal processing capability. In an implementation process, the steps of the methods in FIG. 2 to FIG. 8 in embodiments of this application may be completed by using an integrated logic circuit of hardware in the processor 1002 or by using instructions in a form of software.

The processor 1002 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like.

The steps of the methods disclosed with reference to embodiments of this application may be directly performed and completed by a hardware decoding processor, or may be performed and completed by using a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory 1001. The processor 1002 reads information in the memory 1001, and completes, in combination with hardware of the processor, functions that need to be performed by units included in the apparatus in this application. For example, the processor may perform steps/functions in the embodiments shown in FIG. 2 to FIG. 8.

The communication interface 1003 may use, but not limited to, a transceiver apparatus of a transceiver type, to implement communication between the apparatus 1000 and another device or a communication network.

The bus 1004 may include a path for transmitting information between components (for example, the memory 1001, the processor 1002, and the communication interface 1003) of the apparatus 1000.

It should be understood that the apparatus 1000 shown in this embodiment of this application may be an electronic device, or may be a chip configured in an electronic device. The apparatus 1000 may be deployed in a terminal device, or may be deployed in a network device.

All or some of the foregoing embodiments may be implemented by using software, hardware, firmware, or any combination thereof. When software is used to implement embodiments, all or some of the foregoing embodiments may be implemented in a form of computer program product. The computer program product includes one or more computer instructions or computer programs. When the computer instructions or the computer programs are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that, the term "and/or" in this specification merely describes an association relationship between associated objects and indicates that three relationships may exist. For example, A and/or B may indicate the following three cases: Only A exists, both A and B exist, and only B exists. A and B may be singular or plural. In addition, the character "/" in this specification usually indicates an "or" relationship between associated objects, but may also indicate an "and/or" relationship. For details, refer to the context for understanding.

In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

It should be understood that, in embodiments of this application, sequence numbers of the foregoing processes do not mean execution sequences. The execution sequences of the processes should be determined according to functions and internal logic of the processes, and shall not be construed as any limitation on the implementation processes of embodiments of this application.

A person of ordinary skill in the art may be aware that, units and algorithm steps in the examples described with reference to embodiments disclosed in this specification can be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it shall not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An image processing method, comprising:
obtaining a first image;
determining blurring information of the first image, wherein the blurring information indicates a blurred area in the first image; and
performing deblurring processing on the first image based on the first image and the blurring information of the first image by using a first neural network, to obtain a second image, wherein the first neural network is used to perform deblurring processing on an image based on the image and blurring information of the image.

2. The method according to claim 1, wherein the method further comprises:
obtaining first event data generated by an event camera within first duration, wherein the first duration is exposure duration used by a first camera that shoots the first image; and
determining the blurring information of the first image comprises:
determining the blurring information of the first image based on the first image and the first event data.

3. The method according to claim 2, wherein determining the blurring information of the first image based on the first image and the first event data comprises:
determining, as the blurring information of the first image, a feature that is output by a blurring feature extractor after the first image and the first event data are input to the blurring feature extractor, wherein
the blurring feature extractor is first i layers in a second neural network, the second neural network is obtained through training based on first training data, the first training data comprises a pair of images with different blurring degrees, and event data and a label that correspond to the pair of images with different blurring degrees, the pair of images with different blurring degrees correspond to the same event data, and the label indicates sorting of image-level blurring degrees and/or sorting of pixel-level blurring degrees of the pair of images with different blurring degrees.

4. The method according to claim 3, wherein exposure duration of the pair of images with different blurring degrees is different, or resolutions of the pair of images with different blurring degrees are different.

5. The method according to claim 4, wherein the method further comprises:
obtaining j images with different resolutions based on the first image, wherein the j images with different resolutions comprise the first image with a first resolution and j-1 images with different resolutions obtained by scaling down the first image; and
obtaining blurring information of each of the j-1 images with different resolutions based on the image and the first event data by using the blurring feature extractor; and
performing deblurring processing on the first image based on the first image and the blurring information of the first image by using the first neural network, to obtain the second image comprises:
performing deblurring processing on the first image based on the first image, the blurring information of the first image, the j-1 images with different resolutions, and the respective blurring information of the j-1 images with different resolutions by using the first neural network, to obtain the second image.

6. The method according to claim 5, wherein j is 3, and the j-1 images with different resolutions comprise an image obtained by performing downsampling with a factor of 2 on the first image and an image obtained by performing further downsampling with a factor of 2 on the image obtained by performing downsampling with a factor of 2.

7. The method according to claim 5 or 6, wherein the method further comprises:
obtaining second training data, wherein the second training data comprises a third image with the first resolution, blurring information of the third image, the j-1 images with different resolutions obtained by scaling down the third image and respective blurring information, and respective labels of the third image and the j-1 images with different resolutions obtained by scaling down the third image, and the label of each image indicates a deblurred image of the image; and
training a neural network based on the second training data, to obtain the first neural network.

8. The method according to any one of claims 1 to 7, wherein the first camera is an RGB camera.

9. The method according to any one of claims 1 to 8, wherein the first neural network is a convolutional neural network.

10. An image processing apparatus, comprising:
an obtaining module, configured to obtain a first image; and
a processing module, configured to determine blurring information of the first image, wherein the blurring information indicates a blurred area in the first image; and
the processing module is further configured to perform deblurring processing on the first image based on the first image and the blurring information of the first image by using a first neural network, to obtain a second image, wherein the first neural network is used to perform deblurring processing on an image based on the image and blurring information of the image.

11. The apparatus according to claim 10, wherein the obtaining module is further configured to:
obtain first event data generated by an event camera within first duration, wherein the first duration is exposure duration used by a first camera that shoots the first image; and
the processing module is further configured to:
determine the blurring information of the first image based on the first image and the first event data.

12. The apparatus according to claim 11, wherein when the processing module determines the blurring information of the first image based on the first image and the first event data, the processing module is specifically configured to:
determine, as the blurring information of the first image, a feature that is output by a blurring feature extractor after the first image and the first event data are input to the blurring feature extractor, wherein
the blurring feature extractor is first i layers in a second neural network, the second neural network is obtained through training based on first training data, the first training data comprises a pair of images with different blurring degrees, and event data and a label that correspond to the pair of images with different blurring degrees, the pair of images with different blurring degrees correspond to the same event data, and the label indicates sorting of image-level blurring degrees and/or sorting of pixel-level blurring degrees of the pair of images with different blurring degrees.

13. The apparatus according to claim 12, wherein exposure duration of the pair of images with different blurring degrees is different, or resolutions of the pair of images with different blurring degrees are different.

14. The apparatus according to claim 13, wherein the processing module is further configured to:
obtain j images with different resolutions based on the first image, wherein the j images with different resolutions comprise the first image with a first resolution and j-1 images with different resolutions obtained by scaling down the first image;
obtain blurring information of each of the j-1 images with different resolutions based on the image and the first event data by using the blurring feature extractor; and
perform deblurring processing on the first image based on the first image, the blurring information of the first image, the j-1 images with different resolutions, and the respective blurring information of the j-1 images with different resolutions by using the first neural network, to obtain the second image.

15. The apparatus according to claim 14, wherein j is 3, and the j-1 images with different resolutions comprise an image obtained by performing downsampling with a factor of 2 on the first image and an image obtained by performing further downsampling with a factor of 2 on the image obtained by performing downsampling with a factor of 2.

16. The apparatus according to claim 14 or 15, wherein the obtaining module is further configured to:
obtain second training data, wherein the second training data comprises a third image with the first resolution, blurring information of the third image, the j-1 images with different resolutions obtained by scaling down the third image and respective blurring information, and respective labels of the third image and the j-1 images with different resolutions obtained by scaling down the third image, and the label of each image indicates a deblurred image of the image; and
the processing module is further configured to train a neural network based on the second training data, to obtain the first neural network.

17. The apparatus according to any one of claims 10 to 16, wherein the first camera is an RGB camera.

18. The apparatus according to any one of claims 10 to 16, wherein the first neural network is a convolutional neural network.

19. An autonomous driving apparatus, configured to perform the image processing method according to any one of claims 1 to 9.

20. An autonomous driving system, comprising the image processing apparatus according to any one of claims 10 to 18 or the autonomous driving apparatus according to claim 19.

21. A vehicle, comprising the autonomous driving system according to claim 20.

22. A server, comprising the image processing apparatus according to any one of claims 10 to 18.

23. An image processing apparatus, comprising a memory and a processor, wherein
the memory is configured to store program instructions; and
the processor is configured to invoke the program instructions in the memory to perform the method according to any one of claims 1 to 9.

24. A computer-readable medium, wherein the computer-readable medium stores program code to be executed by a computer, and the program code comprises instructions used to perform the method according to any one of claims 1 to 9.

25. A computer program product, wherein the computer program product comprises computer program code, and when the computer program code is run on a computer, the computer is enabled to implement the method according to claims 1 to 9.
